# EUROPÄISCHE PATENTSCHRIFT

(11) **EP 3 881 659 B1**
(45) Veröffentlichungstag und Bekanntmachung des Hinweises auf die Patenterteilung: **21.05.2025**
(21) Anmeldenummer: 20401020.1
(22) Anmeldetag: 20.03.2020
(51) Int. Cl.: A01C 15/04, A01C 21/00

(54) **VERFAHREN ZUM AUSBRINGEN VON GRANULAREM MATERIAL**
METHOD FOR APPLYING GRANULAR MATERIAL
PROCÉDÉ D'ÉPANDAGE D'UNE MATIÈRE GRANULAIRE

(43) Veröffentlichungstag der Anmeldung: 22.09.2021
(73) Patentinhaber: Amazonen-Werke H. Dreyer SE & Co. KG, 49205 Hasbergen (DE)
(72) Erfinder: Kiefer, Stefan, 49074 Osnabrück (DE); Klemann, Timo, 49191 Belm (DE)

(56) Entgegenhaltungen:
- DE-A1- 102017 210 804
- DE-A1- 4 413 739
- US-A- 5 279 068

## Beschreibung

Die Erfindung betrifft ein Verfahren zum Ausbringen von granularen Material nach dem Oberbegriff des Patentanspruchs 1 und eine landwirtschaftliche Verteileinrichtung nach dem Oberbegriff des Patentanspruchs 11.

Beim Ausbringen von granularen Material, wie etwa körnigen oder pulverförmigen Dünger, können landwirtschaftliche Verteileinrichtungen, die auch als Pneumatikdüngerstreuer bezeichnet werden, eingesetzt, welche mehrere an einem Verteilgestänge angeordnete Verteilelemente, beispielswiese Verteilerdüsen, Prallteller, Leitvorrichtungen, Weichen und/oder dergleichen, aufweisen.

Da die Aussaat einer Vielzahl von landwirtschaftlichen Nutzpflanzen entlang von Saatreihen erfolgt, ergeben sich in der Aufwuchsphase entsprechende Pflanzenreihen auf der landwirtschaftlichen Nutzfläche.

Im Stand der Technik sind bereits Einrichtungen zum Erkennen von Wildpflanzen bekannt, welche neben den Nutzpflanzen auf der landwirtschaftlichen Nutzfläche heranwachsen. Auf Grundlage der Wildpflanzenerkennung kann dann zielgerichtet Pflanzenschutzmittel ausgebracht werden, um die Wildpflanzen zu bekämpfen und das Wachstum der Nutzpflanzen weiter zu steigern. Eine entsprechende Einrichtung ist beispielsweise aus DE 44 13 739 A1 bekannt.

Ferner ist aus der Druckschrift US 2015/0245565 A1 ein Verfahren bekannt, bei welchem Pflanzenreihen erfasst werden, um die Identifikation von Schadbewuchs zu verbessern. Das Dokument schlägt somit eine Möglichkeit zur Schadbewuchsbekämpfung vor.

Aufgrund verschiedener Umstände kann es jedoch vorkommen, dass die auf der landwirtschaftlichen Nutzfläche heranwachsenden Nutzpflanzen lokal nicht entlang des beabsichtigten Reihenmusters positioniert sind. Dies kann beispielsweise auf eine unpräzise Aussaat zurückzuführen sein. Ferner ergeben sich im Bereich des Vorgewendes regelmäßig Bereiche, in welchen feldinterne Reihenstrukturen unterbrochen werden.

Die der Erfindung zugrundeliegende Aufgabe besteht somit darin, eine pflanzenreihenbezogene Ausbringung von granularen Material zu ermöglichen, bei welcher die Ausbringung im Bereich von Reihenunterbrechungen lokal in geeigneter Weise angepasst werden kann.

Die Aufgabe wird gelöst durch ein Verfahren der eingangs genannten Art, wobei das granulare Material in Pflanzenreihen aufweisenden Reihenbereichen der landwirtschaftlichen Nutzfläche von zumindest einem Verteilelement mit einem ersten Verteilmuster ausgebracht wird und in keine Pflanzenreihen aufweisenden reihenfreien Bereichen der landwirtschaftlichen Nutzfläche von zumindest einem Verteilelement mit einem zweiten Verteilmuster ausgebracht wird.

Die Erfindung macht sich die Erkenntnis zunutze, dass durch die Kombination der Pflanzenreihenerfassung einerseits und der Möglichkeit granulares Material sowohl reihenbezogen als auch flächig ausbringen zu können andererseits, eine geeignete Ausbringanpassung in Bereichen, in denen die Reihenstruktur auf der landwirtschaftlichen Nutzfläche unterbrochen ist, umgesetzt werden kann. Das Verfahren erlaubt somit in Pflanzenreihen aufweisenden Reihenbereichen eine reihenbezogene Ausbringung granularen Materials und gleichzeitig eine flächige Ausbringung in reihenfreien Bereichen, in welchen keine Pflanzenreihen in Fahrtrichtung der landwirtschaftlichen Verteileinrichtung vorhanden sind. Dies führt zu einer erheblichen Einsparung von granularen Material. Bei der Ausbringung von granularen Material auf Rüben und Mais können somit erhebliche Mengen an Nährstoffen eingespart werden. Auch bei der Ausbringung von granularen Material auf Kartoffeln können erhebliche Mengen an Dünger eingespart werden.

Pflanzenreihen im Sinne der Erfindung sind Reihen von Pflanzen, welche im Wesentlichen parallel zur Fahrtrichtung der landwirtschaftlichen Verteileinrichtung verlaufen. Ferner ist zu berücksichtigen, dass das erste Verteilmuster sich von dem zweiten Verteilmuster unterscheidet. Vorzugsweise handelt es sich bei dem granularen Material um gekörnten oder pulverförmigen Dünger. Vorzugsweise sind sämtliche Verteilelemente der landwirtschaftlichen Verteileinrichtung einzeln ansteuerbar. Die landwirtschaftliche Verteileinrichtung ist vorzugsweise ein Pneumatikdüngerstreuer. Die Verteilelemente der landwirtschaftlichen Verteileinrichtung sind vorzugsweise als Verteilerdüsen, Prallteller und/oder Leitvorrichtungen ausgebildet.

In einer bevorzugten Ausführungsform des erfindungsgemäßen Verfahrens erfolgt die Ausbringung des granularen Materials in den Reihenbereichen mit einer ersten Gruppe von Verteilelementen und die Ausbringung von granularen Material in den reihenfreien Bereichen mit einer zweiten Gruppe von Verteilelementen. Vorzugsweise unterscheiden sich die Verteilelemente der ersten Gruppe von den Verteilelementen der zweiten Gruppe. Alternativ können die Verteilelemente der ersten Gruppe und die Verteilelemente der zweiten Gruppe im Wesentlichen identisch sein, wobei die Verteilelemente der ersten Gruppe eine Konfiguration aufweisen, welche von der Konfiguration der Verteilelemente der zweiten Gruppe abweicht. Vorzugsweise sind die Verteilelemente der ersten Gruppe äquidistant zueinander beabstandet. Ferner ist es bevorzugt, dass die Verteilelemente der zweiten Gruppe äquidistant zueinander beabstandet sind.

In einer anderen Ausführungsform des erfindungsgemäßen Verfahrens erfolgt ein selbsttätiges Verändern des Verteilmusters in einem Ausbringbereich unterhalb des Verteilgestänges bei Erfassen eines Pflanzenreihenanfangs. Alternativ oder zusätzlich erfolgt ein selbsttätiges Verändern des Verteilmusters in einem Ausbringbereich unterhalb des Verteilgestänges bei Erfassen eines Pflanzenreihenendes. Im Bereich eines Pflanzenreihenanfangs geht ein reihenfreier Bereich in Fahrtrichtung der Verteileinrichtung in einen Reihenbereich über. Im Bereich eines Pflanzenreihenendes geht ein Reihenbereich in Fahrtrichtung der Verteileinrichtung in einen reihenfreien Bereich über. Wenn ein Pflanzenreihenanfang erfasst wird, erfolgt in dem entsprechenden Ausbringbereich unterhalb des Verteilgestänges vorzugsweise eine selbsttätige Einstellung des ersten Verteilmusters oder eine selbsttätige Umstellung von dem zweiten Verteilmuster auf das erste Verteilmuster. Wenn ein Pflanzenreihenende erfasst wird, erfolgt in dem entsprechenden Ausbringbereich unterhalb des Verteilgestänges vorzugsweise eine selbsttätige Einstellung des zweiten Verteilmusters oder eine selbsttätige Umstellung von dem ersten Verteilmuster auf das zweite Verteilmuster. Eine Pflanzenreihe kann beispielsweise in Keilbereichen einer landwirtschaftlichen Nutzfläche, am Vorgewende einer landwirtschaftlichen Nutzfläche oder aufgrund unpräziser Aussaat enden. Ferner ergibt sich in diesen Bereichen bei entgegengesetzter Fahrtrichtung ein entsprechender Pflanzenreihenanfang.

Außerdem ist ein erfindungsgemäßes Verfahren bevorzugt, bei welchem das Verändern des Verteilmusters in einem Ausbringbereich unterhalb des Verteilgestänges bei Erfassen eines Pflanzenreihenanfangs das Deaktivieren zumindest eines dem Ausbringbereich zugeordneten Verteilelements der zweiten Gruppe von Verteilelementen und/oder das Aktivieren zumindest eines dem Ausbringbereich zugeordneten Verteilelements der ersten Gruppe von Verteilelementen umfasst. Einzelnen Ausbringbereichen unterhalb des Verteilgestänges ist jeweils ein Verteilelement oder sind jeweils mehrere Verteilelemente zugeordnet, welche abhängig von der Reihenerfassung aktiviert bzw. deaktiviert werden können. Durch Deaktivieren eines Verteilelements wird dessen Materialausbringung unterbrochen. Durch Aktivieren eines Verteilelements wird dessen Materialausbringung initiiert. Bei Erfassung eines Pflanzenreihenanfangs ist in dem Ausbringbereich von einer flächigen Ausbringung des granularen Materials auf eine reihenbezogene Ausbringung des granularen Materials umzuschalten. Das Umschalten erfolgt durch Deaktivieren zumindest eines Verteilelements der zweiten Gruppe und Aktivieren zumindest eines Verteilelements der ersten Gruppe von Verteilelementen. Hierbei kann Aktivieren/Deaktivieren von Verteilelementen bedeuten, dass zwischen einem Verteilelement der ersten Gruppe und einem Verteilelement der zweiten Gruppe mittels einer Leitvorrichtung umgeschaltet wird und/oder dass ein Verteilelement der ersten oder zweiten Gruppe derart angepasst wird, dass sein Verteilmuster des einen Verteilelementes der zweiten oder ersten Gruppe entspricht. Zur Anpassung des Verteilmusters eines Leitelementes kann eine Aktorik vorgesehen sein, mittels welcher beispielsweise die Form eines als Prallteller ausgeführten Verteilelementes beeinflussbar ist: zur Ausbringung in einem ersten Verteilmuster kann der Prallteller eine V-förmige Gestalt annehmen, wobei seine Streubreite dann gering ist, während zur Ausbringung in einem zweiten Verteilmuster der Prallteller in eine Tellerform überführbar sein kann, wobei seine Streubreite dann weit gefächert ist.

Ferner ist ein erfindungsgemäßes Verfahren vorteilhaft, bei welchem das Verändern des Verteilmusters in einem Ausbringbereich unterhalb des Verteilgestänges bei Erfassen eines Pflanzenreihenendes das Deaktivieren zumindest eines dem Ausbringbereich zugeordneten Verteilelements der ersten Gruppe von Verteilelementen und/oder das Aktivieren zumindest eines dem Ausbringbereich zugeordneten Verteilelements der zweiten Gruppe von Verteilelementen umfasst. Bei Erfassung eines Pflanzenreihenendes ist in dem Ausbringbereich von einer reihenbezogenen Ausbringung des granularen Materials auf eine flächige Ausbringung des granularen Materials umzuschalten. Das Umschalten erfolgt durch Deaktivieren zumindest eines Verteilelements der ersten Gruppe und Aktivieren zumindest eines Verteilelements der zweiten Gruppe von Verteilelementen.

Ferner ist ein erfindungsgemäßes Verfahren vorteilhaft, bei welchem das Verändern des Verteilmusters in einem Ausbringbereich unterhalb des Verteilgestänges bei Erfassen eines Pflanzenreihenanfangs und/oder eines Pflanzenreihenendes das Verändern des Verteilmusters zumindest eines dem Ausbringbereich zugeordneten Verteilelements umfasst. Insbesondere sind die Verteilelemente als Verteilerdüsen, Prallteller, Leitvorrichtungen, Weichen und/oder dergleichen ausgebildet, deren Verteilmuster einstellbar ist. Bei Erfassen eines Pflanzenreihenanfangs und/oder eines Pflanzenreihenendes kann eine entsprechende Verteilmustereinstellung selbsttätig durch die landwirtschaftliche Verteileinrichtung veranlasst werden. Wenn ein Pflanzenreihenanfang erfasst wird, erfolgt an dem zumindest einen dem Ausbringbereich zugeordneten Verteilelement vorzugsweise eine selbsttätige Einstellung des ersten Verteilmusters oder eine selbsttätige Umstellung von dem zweiten Verteilmuster auf das erste Verteilmuster. Wenn ein Pflanzenreihenende erfasst wird, erfolgt an dem zumindest einen dem Ausbringbereich zugeordneten Verteilelement vorzugsweise eine selbsttätige Einstellung des zweiten Verteilmusters oder eine selbsttätige Umstellung von dem ersten Verteilmuster auf das zweite Verteilmuster.

In einer anderen Ausführungsform des erfindungsgemäßen Verfahrens unterscheiden sich das erste Verteilmuster und das zweite Verteilmuster hinsichtlich ihrer Streubreiten und/oder Streuwinkel. Für eine reihenbezogene schmale Streifenausbringung ist entsprechend ein geringer Streuwinkel in den Reihenbereichen bevorzugt. In den Reihenbereichen kann der Streuwinkel in einem Bereich von 30-40 Grad liegen. Die Streubreite kann in einem Bereich von 10-20 cm liegen. Vorzugsweise erfolgt zwischen den Reihenbereichen aufgrund der eingestellten Verteilmuster keine Ausbringung von granularen Material. Ferner kann das Verfahren auch das Erfassen von Wildbewuchs bzw. Schadbewuchs zwischen erfassten Reihenbereichen umfassen, wobei in diesem Fall eine lokale Aussparung der Ausbringung auf den erfassten Wildbewuchs bzw. Schadbewuchs zwischen den Reihenbereichen erfolgen kann. Eine flächige Ausbringung erfolgt vorzugsweise mit einem offenen Streuwinkel in den reihenfreien Bereichen. In den reihenfreien Bereichen erfolgt die Ausbringung vorzugsweise mit einem Streuwinkel von etwa 120 Grad. Die Streubreite in den reihenfreien Bereichen kann bei ca. 100 cm liegen.

Das Verfahren wird außerdem dadurch vorteilhaft weitergebildet, dass das erste Verteilmuster und das zweite Verteilmuster zu unterschiedlichen Ausbringmengen und/oder unterschiedlichen Ausbringraten an granularen Material führen. Durch unterschiedliche Ausbringmengen und/oder Ausbringraten können in den Reihenbereichen und reihenfreien Bereichen unterschiedliche Wirkstoffmengen ausgebracht werden. Da der Pflanzenbewuchs in den Reihenbereichen dem erwarteten Pflanzenbewuchs entspricht, kann in den Reihenbereichen eine vergleichsweise präzise Einstellung einer geeigneten Ausbringmenge und/oder Ausbringrate erfolgen. In den reihenfreien Bereichen weicht der Bewuchs von dem erwarteten Bewuchs ab, sodass in diesen Bereichen ein entsprechender Faktor bei der Ermittlung einer geeigneten Ausbringmenge und/oder Ausbringrate zu berücksichtigen ist.

Außerdem ist ein erfindungsgemäßes Verfahren bevorzugt, bei welchem beim Ausbringen von granularen Material mit dem ersten Verteilmuster und beim Ausbringen von granularen Material mit dem zweiten Verteilmuster unterschiedliche Wirkstoffe und/oder unterschiedliche Wirkstoffkonzentrationen ausgebracht werden. Die Wirkstoffe können beispielsweise Pflanzendünger, Bodendünger, Feinsämereien und/oder Schädlingsbekämpfungsmittel sein. Die Wirkstoffkonzentration kann in den Reihenbereich höher sein als in den reihenfreien Bereichen, insbesondere bei Pflanzendüngern. Alternativ kann die Wirkstoffkonzentration in den reihenfreien Bereichen höher sein als in den Reihenbereichen, insbesondere bei Bodendüngern und/oder Schädlingsbekämpfungsmitteln, wie beispielsweise Schneckenkorn.

In einer alternativen Ausführungsform des erfindungsgemäßen Verfahrens erfolgt das Erfassen der Pflanzenreihen auf der landwirtschaftlichen Nutzfläche mittels einer oder mehrerer Sensoreinrichtungen und/oder einer oder mehrerer Kameras der landwirtschaftlichen Verteileinrichtung. Vorzugsweise ist die eine oder sind die mehreren Sensoreinrichtungen und/oder ist die eine oder sind die mehreren Kameras der landwirtschaftlichen Verteileinrichtung an dem Verteilgestänge der landwirtschaftlichen Verteileinrichtung angeordnet und vorzugsweise befestigt. Insbesondere ist einzelnen oder sämtlichen Verteilelementen eine Sensoreinrichtung und/oder eine Kamera zum Erfassen von Pflanzenreihen zugeordnet. Insbesondere erfolgt die Steuerung der Verteilelemente in Abhängigkeit der Daten, welche von der einen oder den mehreren Sensoreinrichtungen und/oder der einen oder den mehreren Kameras erzeugt werden.

Die der Erfindung zugrundeliegende Aufgabe wird ferner durch eine landwirtschaftliche Verteileinrichtung der eingangs genannten Art gelöst, wobei die Steuerungseinrichtung der erfindungsgemäßen landwirtschaftlichen Verteileinrichtung dazu eingerichtet ist, in Pflanzenreihen aufweisenden Reihenbereichen der landwirtschaftlichen Nutzfläche zumindest ein Verteilelement dazu zu veranlassen, das granulare Material mit einem ersten Verteilmuster auszubringen und in keine Pflanzenreihen aufweisenden reihenfreien Bereichen der landwirtschaftlichen Nutzfläche zumindest ein Verteilelement dazu zu veranlassen, das granulare Material mit einem zweiten Verteilmuster auszubringen.

Die Erfassungseinrichtung kann dabei eine oder mehrere Kameras und/oder Sensoren zur Pflanzenreihenerfassung umfassen.

In einer besonders bevorzugten Ausführungsform der landwirtschaftlichen Verteileinrichtung ist diese dazu eingerichtet, das Verfahren zum Ausbringen von granularen Material nach einer der vorstehend beschriebenen Ausführungsformen auszuführen. Hinsichtlich der Vorteile und Modifikationen der landwirtschaftlichen Verteileinrichtung wird auf die Vorteile und Modifikationen des erfindungsgemäßen Verfahrens zum Ausbringen von granularen Material verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen landwirtschaftlichen Verteileinrichtung während des Ausführens des erfindungsgemäßen Verfahrens in einer schematischen Darstellung; und
- Fig. 2: ein Verteilgestänge einer erfindungsgemäßen landwirtschaftlichen Verteileinrichtung während des Ausführens des erfindungsgemäßen Verfahrens in einer schematischen Darstellung.

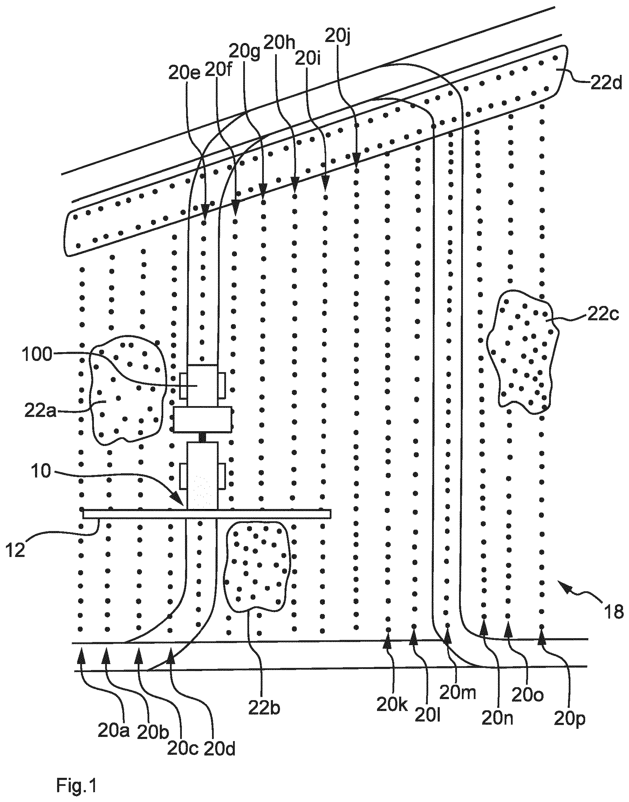

Die Fig. 1 zeigt eine als Pneumatikdüngerstreuer ausgebildete landwirtschaftliche Verteileinrichtung 10, welche von einem Traktor 100 gezogen wird. Die landwirtschaftliche Verteileinrichtung 10 bringt granulares Material auf eine landwirtschaftliche Nutzfläche 18 und die auf der landwirtschaftlichen Nutzfläche 18 befindlichen Pflanzen aus. Die landwirtschaftliche Verteileinrichtung 10 bewegt sich entlang von Fahrgassen, welche Bestandteil eines innerhalb der landwirtschaftlichen Nutzfläche 18 angelegten Fahrgassensystems sind.

Während dem Ausbringen von granularen Material auf die landwirtschaftliche Nutzfläche 18 erfasst die landwirtschaftliche Verteileinrichtung 10 Pflanzenreihen auf der landwirtschaftlichen Nutzfläche 18, welche im Wesentlichen parallel zur Fahrtrichtung der landwirtschaftlichen Verteileinrichtung 10 verlaufen.

Auf der landwirtschaftlichen Nutzfläche 18 befinden sich Reihenbereiche 20a-20p, in welchen Pflanzenreihen im Wesentlichen parallel zur Fahrtrichtung der landwirtschaftlichen Verteileinrichtung 10 verlaufen. Darüber hinaus befinden sich auf der landwirtschaftlichen Nutzfläche 18 reihenfreie Bereiche 22a-22d, welche keine parallel zur Fahrtrichtung der landwirtschaftlichen Verteileinrichtung 10 verlaufenden Pflanzenreihen aufweisen. Die reihenfreien Bereiche 22a-22c sind auf eine unpräzise Saatgutausbringung zurückzuführen. Der reihenfreie Bereich 22d befindet sich im Bereich des Vorgewendes, wobei die Saatgutausbringung in diesem Bereich parallel zur Vorgewende-Fahrspur erfolgte, sodass die feldinterne Reihenstruktur in einem Übergangsbereich zum Vorgewende unterbrochen ist.

Die landwirtschaftliche Verteileinrichtung 10 weist mehrere an einem Verteilgestänge 12 angeordnete Verteilelemente 14a-14g, 16a-16g auf, welche als Verteilerdüsen ausgebildet sind. Das granulare Material wird über die Verteilelemente 14a-14g, 16a-16g auf die landwirtschaftliche Nutzfläche 18 und die sich darauf befindlichen Pflanzen ausgebracht. In den Reihenbereichen 20a-20p der landwirtschaftlichen Nutzfläche 18 wird das granulare Material mit einem ersten Verteilmuster M1 ausgebracht. In den reihenfreien Bereichen 22a-22d der landwirtschaftlichen Nutzfläche 18 wird das granulare Material mit einem zweiten Verteilmuster M2 ausgebracht. Das erste Verteilmuster M1 und das zweite Verteilmuster M2 unterscheiden sich zunächst hinsichtlich ihrer Streubreiten B1, B2 und ihrer Streuwinkel α, β. Das granulare Material wird in den Reihenbereichen 20a-20p mit dem Verteilmuster M1 reihenbezogen ausgebracht, sodass sich eine schmale Streifenausbringung entlang der jeweiligen Pflanzenreihen ergibt. Entsprechend weist das Verteilmuster M1 einen geringen Streuwinkel α auf. In den reihenfreien Bereichen 22a-22d erfolgt über das Verteilmuster M2 eine flächige, nicht-reihenbezogene Ausbringung des granularen Materials. Entsprechend weist das Verteilmuster M2 einen vergleichsweise offenen Streuwinkel β auf.

Darüber hinaus können das erste Verteilmuster M1 und das zweite Verteilmuster M2 zu unterschiedlichen Ausbringmengen an granularen Material führen. Da in den Reihenbereichen 20a-20p eine gezielte Ausbringung auf die in Reihe angeordneten Pflanzen erfolgen kann, kann die Ausbringmenge in den Reihenbereichen 20a-20p geringer als die Ausbringmenge in den reihenfreien Bereichen 22a-22d sein, auf welche das granulare Material mit dem zweiten Verteilmuster M2 ausgebracht wird.

Zusätzlich können beim Ausbringen von granularen Material mit dem ersten Verteilmuster M1 und beim Ausbringen von granularen Material mit dem zweiten Verteilmuster M2 unterschiedliche Wirkstoffe und/oder unterschiedliche Wirkstoffkonzentrationen ausgebracht werden.

Wenn die landwirtschaftliche Verteileinrichtung 10 während des Ausbringens des granularen Materials einen Pflanzenreihenanfang erfasst, wird das Verteilmuster in dem entsprechenden Ausbringbereich unterhalb des Verteilgestänges 12 durch die landwirtschaftliche Verteileinrichtung 10 selbsttätig verändert. Im Bereich eines Pflanzenreihenanfangs geht ein reihenfreier Bereich 22a-22d in Fahrtrichtung der Verteileinrichtung 10 in einen Reihenbereich 20a-20p über. Wenn ein Pflanzenreihenanfang erfasst wird, erfolgt in dem entsprechenden Ausbringbereich unterhalb des Verteilgestänges 12 eine selbsttätige Einstellung des ersten Verteilmusters M1.

Wenn in einem Ausbringbereich unterhalb des Verteilgestänges 12 ein Pflanzenreihenende erfasst wird, wird das Verteilmuster in dem entsprechenden Ausbringbereich unterhalb des Verteilgestänges 12 durch die landwirtschaftliche Verteileinrichtung 10 selbsttätig verändert. Im Bereich eines Pflanzenreihenendes geht ein Reihenbereich 20a-20p in Fahrtrichtung der Verteileinrichtung 10 in einen reihenfreien Bereich 22a-22d über. Wenn ein Pflanzenreihenende erfasst wird, erfolgt in dem entsprechenden Ausbringbereich unterhalb des Verteilgestänges 12 eine selbsttätige Einstellung des zweiten Verteilmusters M2.

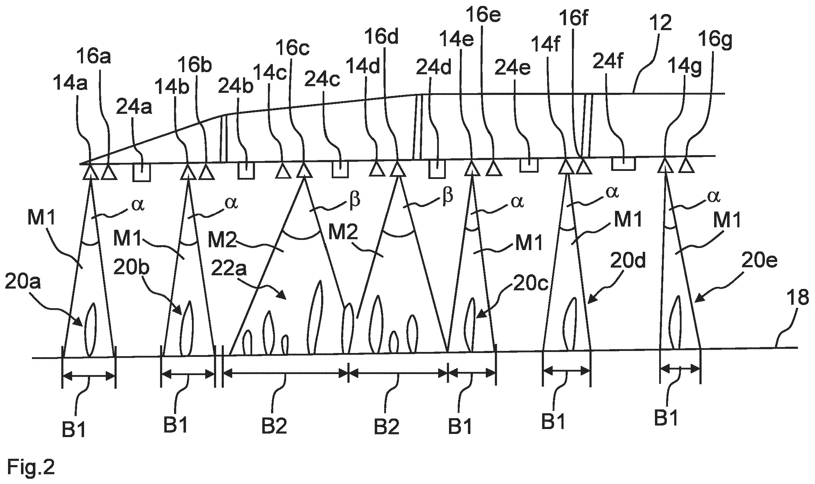

Die Fig. 2 zeigt ein Verteilgestänge 12 mit mehreren als Verteilerdüsen ausgebildeten Verteilelementen 14a-14g, 16a-16g. Die Verteilelemente 14a-14g, 16a-16g umfassen eine erste Gruppe von Verteilelementen 14a-14g und eine zweite Gruppe von Verteilelementen 16a-16g. Mit den Verteilelementen 14a-14g lässt sich ein ersten Verteilmuster M1 realisieren. Mit den Verteilelementen 16a-16g lässt sich ein zweites Verteilmuster M2 realisieren. Das erste Verteilmuster M1 und das zweite Verteilmuster M2 unterscheiden sich hinsichtlich ihrer Streubreiten B1, B2 und ihrer Streuwinkel α, β. Vorliegend sind die Verteilelemente 14a-14g, 16a-16g paarweise angeordnet, wobei in anderen Ausführungsformen abweichende Anordnungen möglich sind.

An dem Verteilgestänge 12 sind ferner mehrere Kameras 24a-24f angeordnet, welche Bestandteile einer Erfassungseinrichtung sind. Die Erfassungseinrichtung dient zum Erfassen von Pflanzenreihen auf der landwirtschaftlichen Nutzfläche 18 während des Ausbringens des granularen Materials. Mittels einer Steuerungseinrichtung der landwirtschaftlichen Verteileinrichtung 10 lassen sich die Verteilelemente 14a-14g, 16a-16g einzeln ansteuern.

In den durch die Kameras 24a-24f erfassten Reihenbereichen 20a-20e wird das granulare Material mittels der Verteilelemente 14a, 14b, 14e, 14f, 14g der ersten Gruppe von Verteilelementen 14a-14g ausgebracht. In dem durch die Kameras 24a-24f erfassten reihenfreien Bereich 22a wird das granulare Material mittels der Verteilelemente 16c, 16d aus der zweiten Gruppe der Verteilelemente 16a-16g ausgebracht. Somit kommt es in den Reihenbereichen 20a-20e zu einer reihenbezogenen Ausbringung des granularen Materials mit dem ersten Verteilmuster M1. Im reihenfreien Bereich 22a kommt es zu einer flächigen Ausbringung des granularen Materials mit dem Verteilmuster M2.

Wenn im weiteren Verlauf ein neuer Pflanzenreihenanfang erfasst wird, erfolgt in dem entsprechenden Ausbringbereich unterhalb des Verteilgestänges 12 eine selbsttätige Umstellung von dem zweiten Verteilmuster M2 auf das erste Verteilmuster M1. Die Umstellung von dem zweiten Verteilmuster M2 auf das erste Verteilmuster M1 wird durch ein Deaktivieren zumindest eines dem Ausbringbereich zugeordneten Verteilelements 16a-16g der zweiten Gruppe von Verteilelementen 16a-16g und einem Aktivieren zumindest eines dem Ausbringbereich zugeordneten Verteilelements 14a-14g der ersten Gruppe von Verteilelementen 14a-14g umgesetzt.

Wenn im weiteren Verlauf ein Pflanzenreihenende erfasst wird, erfolgt in dem entsprechenden Ausbringbereich unterhalb des Verteilgestänges 12 eine selbsttätige Umstellung von dem ersten Verteilmuster M1 auf das zweite Verteilmuster M2. Das Umstellen von dem ersten Verteilmuster M1 auf das zweite Verteilmuster M2 wird durch ein Deaktivieren zumindest eines dem Ausbringbereich zugeordneten Verteilelements 14a-14g der ersten Gruppe von Verteilelementen 14a-14g und einem Aktivieren zumindest eines dem Ausbringbereich zugeordneten Verteilelements 16a-16g der zweiten Gruppe von Verteilelementen 16a-16g umgesetzt.

### Bezugszeichen

- 10: landwirtschaftliche Verteileinrichtung
- 12: Verteilgestänge
- 14a-14g: Verteilelemente
- 16a-16g: Verteilelemente
- 18: landwirtschaftliche Nutzfläche
- 20a-20p: Reihenbereiche
- 22a-22d: reihenfreie Bereiche
- 24a-24f: Kameras

- 100: Traktor

- M1, M2: Verteilmuster
- B1, B2: Streubreite
- α, β: Streuwinkel

## Patentansprüche

1. Verfahren zum Ausbringen von granularem Material mittels einer landwirtschaftlichen Verteileinrichtung (10), mit den Schritten:
- Ausbringen von granularem Material auf eine landwirtschaftliche Nutzfläche (18) mittels mehrerer Verteilelemente (14a-14g, 16a-16g), welche an einem Verteilgestänge (12) der landwirtschaftlichen Verteileinrichtung (10) angeordnet sind, und
- Erfassen von Pflanzenreihen auf der landwirtschaftlichen Nutzfläche (18) während des Ausbringens des granularen Materials;
wobei das granulare Material in Pflanzenreihen aufweisenden Reihenbereichen (20a-20p) der landwirtschaftlichen Nutzfläche (18) von zumindest einem Verteilelement (14a-14g, 16a-16g) mit einem ersten Verteilmuster (M1) ausgebracht wird,
**dadurch gekennzeichnet, dass** das granulare Material in keine Pflanzenreihen aufweisenden reihenfreien Bereichen (22a-22d) der landwirtschaftlichen Nutzfläche (18) von zumindest einem Verteilelement (14a-14g, 16a-16g) mit einem zweiten Verteilmuster (M2) ausgebracht wird.

2. Verfahren nach Anspruch 1,
**dadurch gekennzeichnet, dass** die Ausbringung des granularen Materials in den Reihenbereichen (20a-20p) mit einer ersten Gruppe von Verteilelementen (14a-14g) und die Ausbringung des granularen Materials in den reihenfreien Bereichen (22a-22d) mit einer zweiten Gruppe von Verteilelementen (16a-16g) erfolgt.

3. Verfahren nach Anspruch 1 oder 2,
**gekennzeichnet durch** zumindest einen der folgenden Schritte:
- selbsttätiges Verändern des Verteilmusters (M1, M2) in einem Ausbringbereich unterhalb des Verteilgestänges (12) bei Erfassen eines Pflanzenreihenanfangs;
- selbsttätiges Verändern des Verteilmusters (M1, M2) in einem Ausbringbereich unterhalb des Verteilgestänges (12) bei Erfassen eines Pflanzenreihenendes.

4. Verfahren nach den Ansprüchen 2 und 3,
**dadurch gekennzeichnet, dass** das Verändern des Verteilmusters (M1, M2) in einem Ausbringbereich unterhalb des Verteilgestänges (12) bei Erfassen eines Pflanzenreihenanfangs zumindest einen der folgenden Schritte umfasst:
- Deaktivieren zumindest eines dem Ausbringbereich zugeordneten Verteilelements (16a-16g) der zweiten Gruppe von Verteilelementen (16a-16g);
- Aktivieren zumindest eines dem Ausbringbereich zugeordneten Verteilelements (14a-14g) der ersten Gruppe von Verteilelementen (14a-14g).

5. Verfahren nach den Ansprüchen 2 und 3, oder 2 und 4,
**dadurch gekennzeichnet, dass** das Verändern des Verteilmusters (M1, M2) in einem Ausbringbereich unterhalb des Verteilgestänges (12) bei Erfassen eines Pflanzenreihenendes zumindest einen der folgenden Schritte umfasst:
- Deaktivieren zumindest eines dem Ausbringbereich zugeordneten Verteilelements (14a-14g) der ersten Gruppe von Verteilelementen (14a-14g);
- Aktivieren zumindest eines dem Ausbringbereich zugeordneten Verteilelements (16a-16g) der zweiten Gruppe von Verteilelementen (16a-16g).

6. Verfahren nach Anspruch 3,
**dadurch gekennzeichnet, dass** das Verändern des Verteilmusters (M1, M2) in einem Ausbringbereich unterhalb des Verteilgestänges (12) bei Erfassen eines Pflanzenreihenanfangs und/oder eines Pflanzenreihenendes den folgenden Schritt umfasst:
- Verändern des Verteilmusters (M1, M2) zumindest eines dem Ausbringbereich zugeordneten Verteilelements.

7. Verfahren nach einem der vorstehenden Ansprüche,
**dadurch gekennzeichnet, dass** das erste Verteilmuster (M1) und das zweite Verteilmuster (M2) sich hinsichtlich ihrer Streubreiten (B1, B2) und/oder Streuwinkel (α, β) unterscheiden.

8. Verfahren nach einem der vorstehenden Ansprüche,
**dadurch gekennzeichnet, dass** das erste Verteilmuster (M1) und das zweite Verteilmuster (M2) zu unterschiedlichen Ausbringmengen und/oder unterschiedlichen Ausbringraten an granularen Material führen.

9. Verfahren nach einem der vorstehenden Ansprüche,
**dadurch gekennzeichnet, dass** beim Ausbringen von granularen material mit dem ersten Verteilmuster (M1) und beim Ausringen von granularen Material mit dem zweiten Verteilmuster (M2) unterschiedliche Wirkstoffe und/oder unterschiedliche Wirkstoffkonzentrationen ausgebracht werden.

10. Verfahren nach einem der vorstehenden Ansprüche,
**dadurch gekennzeichnet, dass** das Erfassen der Pflanzenreihen auf der landwirtschaftlichen Nutzfläche (18) mittels einer oder mehreren Sensoreinrichtungen und/oder einer oder mehreren Kameras (24a-24f) der landwirtschaftlichen Verteileinrichtung (10) erfolgt.

11. Landwirtschlichte Verteileinrichtung (10), insbesondere Pneumatikstreuer, mit
- mehreren Verteilelementen (14a-14g, 16a-16g), welche an einem Verteilgestänge (12) angeordnet und dazu eingerichtet sind, granulares Material auf die landwirtschaftliche Nutzfläche (18) auszubringen;
- einer Erfassungseinrichtung, welche dazu eingerichtet ist, Pflanzenreihen auf der landwirtschaftlichen Nutzfläche (18) während des Ausbringens des granularen Materials zu erfassen; und
- einer Steuerungseinrichtung, welche dazu eingerichtet ist, die Ausbringung des granularen Materials durch die Verteilelemente (14a-14g, 16a-16g) zu steuern;
wobei die Steuerungseinrichtung dazu eingerichtet ist, in Pflanzenreihen aufweisenden Reihenbereichen (20a-20p) der landwirtschaftlichen Nutzfläche (18) zumindest ein Verteilelement (14a-14g, 16a-16g) dazu zu veranlassen, das granulare Material mit einem ersten Verteilmuster (M1) auszubringen,
**dadurch gekennzeichnet, dass** die Steuerungseinrichtung dazu eingerichtet ist,
in keine Pflanzenreihen aufweisenden reihenfreien Bereichen (22a-22d) der landwirtschaftlichen Nutzfläche (18) zumindest ein Verteilelement (14a-14g, 16a-16g) dazu zu veranlassen, das granulare Material mit einem zweiten Verteilmuster (M2) auszubringen.

## Claims

1. Method for applying granular material by means of an agricultural distribution device (10), comprising the steps of:
- applying granular material onto an agricultural area (18) by means of a plurality of distributing elements (14a-14g, 16a-16g) which are arranged on a distributor boom (12) of the agricultural distribution device (10), and
- detecting rows of plants on the agricultural area (18) during the application of the granular material;
the granular material being applied in row regions (20a-20p) of the agricultural area (18), which comprise rows of plants, by at least one distributing element (14a-14g, 16a-16g) with a first distribution pattern (M1),
**characterized in that** the granular material is applied in row-free regions (22a-22d) of the agricultural area (18), which do not comprise rows of plants, by at least one distributing element (14a-14g, 16a-16g) with a second distribution pattern (M2).

2. Method according to claim 1,
**characterized in that** the granular material is applied in the row regions (20a-20p) using a first group of distributing elements (14a-14g), and the granular material is applied in the row-free regions (22a-22d) using a second group of distributing elements (16a-16g).

3. Method according to claim 1 or claim 2,
**characterized by** at least one of the following steps:
- automatically changing the distribution pattern (M1, M2) in an application region below the distributor boom (12) when a start of a row of plants is detected;
- automatically changing the distribution pattern (M1, M2) in an application region below the distributor boom (12) when an end of a row of plants is detected.

4. Method according to claims 2 and 3,
**characterized in that** changing the distribution pattern (M1, M2) in an application region below the distributor boom (12) when a start of a row of plants is detected comprises at least one of the following steps:
- deactivating at least one distributing element (16a-16g) of the second group of distributing elements (16a-16g), which distributing element is assigned to the application region;
- activating at least one distributing element (14a-14g) of the first group of distributing elements (14a-14g), which distributing element is assigned to the application region.

5. Method according to claims 2 and 3, or claims 2 and 4,
**characterized in that** changing the distribution pattern (M1, M2) in an application region below the distributor boom (12) when an end of a row of plants is detected comprises at least one of the following steps:
- deactivating at least one distributing element (14a-14g) of the first group of distributing elements (14a-14g), which distributing element is assigned to the application region;
- activating at least one distributing element (16a-16g) of the second group of distributing elements (16a-16g), which distributing element is assigned to the application region.

6. Method according to claim 3,
**characterized in that** changing the distribution pattern (M1, M2) in an application region below the distributor boom (12) when a start of a row of plants and/or an end of a row of plants is detected comprises the following step:
- changing the distribution pattern (M1, M2) of at least one distributing element assigned to the application region.

7. Method according to any of the preceding claims,
**characterized in that** the first distribution pattern (M1) and the second distribution pattern (M2) differ with respect to their spreading widths (B1, B2) and/or spreading angles (α, β).

8. Method according to any of the preceding claims,
**characterized in that** the first distribution pattern (M1) and the second distribution pattern (M2) lead to different application amounts and/or different application rates of granular material.

9. Method according to any of the preceding claims,
**characterized in that** different active substances and/or different active substance concentrations are applied when granular material is applied with the first distribution pattern (M1) and when granular material is applied with the second distribution pattern (M2).

10. Method according to any of the preceding claims,
**characterized in that** the rows of plants on the agricultural area (18) are detected by means of one or more sensor devices and/or one or more cameras (24a-24f) of the agricultural distribution device (10).

11. Agricultural distribution device (10), in particular a pneumatic spreader, comprising
- a plurality of distributing elements (14a-14g, 16a-16g) which are arranged on a distributor boom (12) and are designed to apply granular material onto the agricultural area (18);
- a detection device which is designed to detect rows of plants on the agricultural area (18) during the application of the granular material; and
- a control device which is designed to control the application of the granular material by the distributing elements (14a-14g, 16a-16g);
the control device being designed to cause at least one distributing element (14a-14g, 16a-16g) to apply the granular material with a first distribution pattern (M1) in row regions (20a-20p) of the agricultural area (18) which comprise rows of plants,
**characterized in that** the control device is designed to cause at least one distributing element (14a-14g, 16a-16g) to apply the granular material with a second distribution pattern (M2) in row-free regions (22a-22d) of the agricultural area (18) which do not comprise rows of plants.

## Revendications

1. Procédé pour l'épandage de matériau granulaire au moyen d'un dispositif de pulvérisation agricole (10), comportant les étapes consistant à :
- épandre du matériau granulaire sur une surface agricole utile (18) au moyen de plusieurs éléments de pulvérisation (14a-14g, 16a-16g) qui sont disposés au niveau d'une rampe de pulvérisation (12) du dispositif de pulvérisation agricole (10), et
- détecter des rangées de plantes sur la surface agricole utile (18) pendant l'épandage du matériau granulaire ;
dans lequel le matériau granulaire est épandu dans des zones de rangées (20a-20p) présentant des rangées de plantes de la surface agricole utile (18) par au moins un élément de pulvérisation (14a-14g, 16a-16g) avec un premier modèle de pulvérisation (M1),
**caractérisé en ce que** le matériau granulaire est épandu dans des zones sans rangées (22a-22d) ne présentant pas de rangées de plantes de la surface agricole utile (18) par au moins un élément de pulvérisation (14a-14g, 16a-16g) avec un second modèle de pulvérisation (M2).

2. Procédé selon la revendication 1,
**caractérisé en ce que** l'épandage du matériau granulaire dans les zones de rangées (20a-20p) est effectué à l'aide d'un premier groupe d'éléments de pulvérisation (14a-14g) et l'épandage du matériau granulaire dans les zones sans rangées (22a-22d) est effectué à l'aide d'un second groupe d'éléments de pulvérisation (16a-16g).

3. Procédé selon la revendication 1 ou 2,
**caractérisé par** au moins l'une des étapes suivantes :
- modification automatique du modèle de pulvérisation (M1, M2) dans une zone d'épandage sous la rampe de pulvérisation (12) lors de la détection d'un début de rangée de plantes ;
- modification automatique du modèle de pulvérisation (M1, M2) dans une zone d'épandage sous la rampe de pulvérisation (12) lors de la détection d'une fin de rangée de plantes.

4. Procédé selon les revendications 2 et 3,
**caractérisé en ce que** la modification du modèle de pulvérisation (M1, M2) dans une zone d'épandage sous la rampe de pulvérisation (12) lors de la détection d'un début de rangée de plantes comprend au moins l'une des étapes suivantes :
- désactivation d'au moins un élément de pulvérisation (16a-16g), associé à la zone d'épandage, du second groupe d'éléments de pulvérisation (16a-16g) ;
- activation d'au moins un élément de pulvérisation (14a-14g), associé à la zone d'épandage, du premier groupe d'éléments de pulvérisation (14a-14g).

5. Procédé selon les revendications 2 et 3, ou 2 et 4,
**caractérisé en ce que** la modification du modèle de pulvérisation (M1, M2) dans une zone d'épandage sous la rampe de pulvérisation (12) lors de la détection d'une extrémité de rangée de plantes comprend au moins l'une des étapes suivantes :
- désactivation d'au moins un élément de pulvérisation (14a-14g), associé à la zone d'épandage, du premier groupe d'éléments de pulvérisation (14a-14g) ;
- activation d'au moins un élément de pulvérisation (16a-16g), associé à la zone d'épandage, du second groupe d'éléments de pulvérisation (16a-16g).

6. Procédé selon la revendication 3,
**caractérisé en ce que** la modification du modèle de pulvérisation (M1, M2) dans une zone d'épandage sous la rampe de pulvérisation (12) lors de la détection d'un début de rangée de plantes et/ou d'une extrémité de rangée de plantes comprend l'étape suivante :
- modification du modèle de pulvérisation (M1, M2) d'au moins un élément de pulvérisation associé à la zone d'épandage.

7. Procédé selon l'une des revendications précédentes,
**caractérisé en ce que** le premier modèle de pulvérisation (M1) et le second modèle de pulvérisation (M2) se distinguent par leurs largeurs d'épandage (B1, B2) et/ou leurs angles d'épandage (α, β).

8. Procédé selon l'une des revendications précédentes,
**caractérisé en ce que** le premier modèle de pulvérisation (M1) et le second modèle de pulvérisation (M2) entraînent des quantités d'épandage et/ou des taux d'épandage de matériau granulaire différents.

9. Procédé selon l'une des revendications précédentes,
**caractérisé en ce que,** lors de l'épandage de matériau granulaire avec le premier modèle de pulvérisation (M1) et lors de l'épandage de matériau granulaire avec le second modèle de pulvérisation (M2), différentes substances actives et/ou différentes concentrations en substance active sont épandues.

10. Procédé selon l'une des revendications précédentes,
**caractérisé en ce que** la détection des rangées de plantes sur la surface utile agricole (18) est effectuée au moyen d'un ou de plusieurs dispositifs formant capteurs et/ou d'une ou de plusieurs caméras (24a-24f) du dispositif de pulvérisation agricole (10).

11. Dispositif de pulvérisation agricole (10), en particulier épandeur pneumatique, comportant
- plusieurs éléments de pulvérisation (14a-14g, 16a-16g) qui sont disposés au niveau d'une rampe de pulvérisation (12) et conçus pour épandre du matériau granulaire sur la surface agricole utile (18) ;
- un dispositif formant capteur qui est configuré pour détecter des rangées de plantes sur la surface agricole utile (18) pendant l'épandage du matériau granulaire ; et
- un dispositif de commande qui est configuré pour commander l'épandage du matériau granulaire par les éléments de pulvérisation (14a-14g, 16a-16g) ;
dans lequel le dispositif de commande est configuré pour amener au moins un élément de pulvérisation (14a-14g, 16a-16g) à épandre le matériau granulaire avec un premier modèle de pulvérisation (M1) dans des zones de rangées (20a-20p) présentant des rangées de plantes de la surface agricole utile (18),
**caractérisé en ce que** le dispositif de commande est configuré pour amener au moins un élément de pulvérisation (14a-14g, 16a-16g) à épandre le matériau granulaire avec un second modèle de distribution (M2) dans des zones sans rangées de plantes (22a-22d) de la surface agricole utile (18).
